# EUROPÄISCHE PATENTANMELDUNG

(11) **EP 1 279 642 A2**
(43) Veröffentlichungstag der Anmeldung: **29.01.2003**
(21) Anmeldenummer: 02012130.7
(22) Anmeldetag: 01.06.2002
(51) Int. Cl.: C01B 7/07

(54) **Verfahren zur Abtrennung von Fremdhalogenwasserstoffen aus einem Chlorwasserstoffstrom mittels Absorption**

(30) Priorität: 26.07.2001 DE 10136312
(71) Anmelder: Degussa AG, 40474 Düsseldorf (DE)
(72) Erfinder: Krissmann, Jörg, Dr., 45772 Marl (DE); Kahsnitz, John, Dr., 45721 Haltern (DE); Burghardt, Rudolf, Dr., 45657 Recklinghausen (DE)

(57) **Zusammenfassung**

Die Erfindung betrifft ein Verfahren zur Abtrennung kleiner Mengen von Fremdhalogenwasserstoffen, vorzugsweise Bromwasserstoff, aus einem gasförmigen Chlorwasserstoffstrom durch Absorption, wobei das Absorptionsmittel, vorzugsweise Wasser oder eine wässrige Chlorwasserstofflösung, mindestens ein Fremdhalogen selektiv zurückhält. Zur Minimierung des ausgeschleusten Massenstroms an beladenem Absorptionsmittel wird dieses vorzugsweise in mindestens zwei gekoppelten Kreisläufen im Gegenstrom zum Gas geführt.

## Beschreibung

Die Erfindung betrifft ein Verfahren zur Abtrennung kleiner Mengen von Fremdhalogenwasserstoffen aus einem gasförmigen Chlorwasserstoffstrom (HCl) durch Absorption, wobei als Absorptionsmittel vorzugsweise Wasser oder wässrige Chlorwasserstofflösung (Salzsäure) verwendet wird.

Viele chemische Synthesen werden mit hochreinem Chlorwasserstoff durchgeführt. Ein Beispiel ist die Herstellung von hochreinem Siliziumtetrachlorid (SiCl₄) aus Chlorwasserstoff und Silizium. Bei dieser Synthese führen bereits geringste Spuren von zum Beispiel Bromwasserstoff im Chlorwasserstoff zu einer signifikanten Verunreinigung des Wertproduktes Siliziumtetrachlorid. Der zur Synthese erforderliche Chlorwasserstoffstrom wird in der Regel gasförmig bezogen und kann als Folge seines Herstellungsverfahrens nennenswerte Anteile an zum Beispiel Bromwasserstoff enthalten.

Technisch angewandte Verfahren zur Reinigung von Chlorwasserstoff beziehungsweise Salzsäure von Fremdhalogenen basieren meist auf der elektrolytischen Oxidation. Das entstehende Wasserstoffgas wird dabei aus der Lösung ausgetrieben (DE 43 20 865). Ein weiteres in der Literatur beschriebenes Verfahren besteht in der Oxidation von Bromwasserstoff durch Zugabe von reinem Chlor (EP-A-0 506 050). Weiterhin wird in der europäischen Patentanmeldung EP-A-0 582 914 ein Verfahren zur destillativen Aufkonzentrierung von verdünnter Salzsäure und Abtrennung von Fremdhalogenen beschrieben, das in mehreren verschalteten Rektifikationskolonnen stattfindet.

Alle genannten Verfahren gehen von verdünnter wässriger Salzsäure aus und finden in der flüssigen Phase statt. Die intermediäre Überführung des gasförmigen Chlorwasserstoffs in flüssige Salzsäure zum Zwecke der Reinigung und nachfolgende Zurückführung in den gasförmigen Zustand ist mit einem erheblichen energetischen Aufwand verbunden und scheidet daher für ein technisches Verfahren aus. Eine Abreicherung von zum Beispiel Bromwasserstoff auf eine Konzentration von unter 1 Gew.-ppm ist mit allen genannten Verfahren darüberhinaus nur mit einem erheblichen apparativen Aufwand durchführbar.

Es bestand daher die Aufgabe, ein Verfahren zu finden, das eine Abtrennung kleiner Mengen von Fremdhalogenwasserstoffen direkt aus einem gasförmigen Chlorwasserstoffstrom erlaubt. Die erreichbare Konzentration sollte dabei unter 1 Gew.-ppm Fremdhalogenwasserstoff im Reingasstrom liegen.

Es wurde überraschend gefunden, dass sich die genannte Trennaufgabe durch Absorption lösen lässt, wobei das frische Absorptionsmittel vorzugsweise Wasser oder wässrige Salzsäure ist und mindestens ein Fremdhalogen selektiv zurückhält.

Gegenstand der Erfindung ist daher ein Verfahren zur selektiven Abtrennung kleiner Mengen von Fremdhalogenwasserstoffen aus einem gasförmigen Chlorwasserstoffstrom durch Absorption vorzugsweise mit Wasser oder wässriger Salzsäure als frischem Absorptionsmittel. Das Absorptionsmittel wird vorzugsweise in mindestens zwei gekoppelten Kreisläufen im Gegenstrom zum Gas geführt.

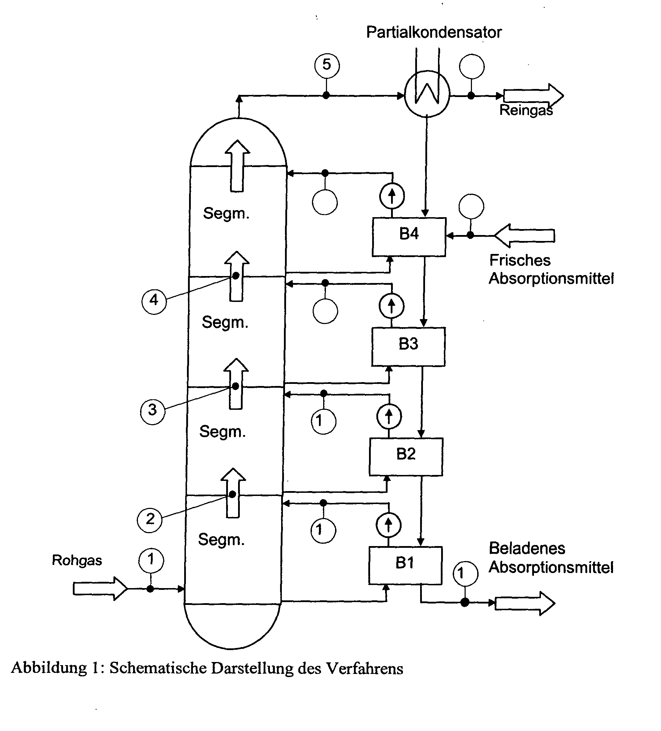

Der Absorber kann aus zwei oder mehr Segmenten bestehen, die vorzugsweise in kontinuierlichem Gegenstrom betrieben werden. Am Ende eines jeden Segments wird die flüssige Phase vollständig abgezogen, während das Gas in das jeweils obere Segment gelangt. In Abbildung 1 ist eine beispielhafte Verfahrensvariante mit vier Segmenten dargestellt. Der Druckbereich liegt im Bereich von 0,1 bar bis 20 bar absolut, vorzugsweise 1 bar bis 10 bar, besonders bevorzugt bei circa 1 bar (Umgebungsdruck). Die Temperatur im Absorber liegt im Bereich von 0 °C bis 150 °C, vorzugsweise im Bereich von 10 °C bis 80 °C. Das gereinigte Gas durchläuft eine Partialkondensation, die aus ökonomischen Gründen vorzugsweise aus einer Stufe besteht. Die Temperatur bei der partiellen Kondensation beträgt - 20 °C bis + 40 °C. Vorzugsweise liegt sie unter + 5 °C, besonders bevorzugt unter 0 °C.

Die Konzentration des Fremdhalogenwasserstoffs im Rohgas liegt zwischen 5 Gew.-ppm und 2000 Gew.-ppm, bevorzugt im Bereich von 5 Gew.-ppm bis 400 Gew.-ppm. Der Gasstrom kann auch inerte Bestandteile wie zum Beispiel Stickstoff als Trägergas enthalten. Die Konzentration des Chlorwasserstoffes beträgt daher zwischen 10 Vol.-% und 100 Vol.-% im eintretenden (fremdhalogenwasserstofffrei gerechnet) Gasstrom, vorzugsweise 50 Vol.-% bis 100 Vol.-%, besonders bevorzugt 90 Vol.-% bis 100 Vol.-%.

Die Massenströme und Konzentrationen der eingetragenen Zustandspunkte wurden für einen bespielhaften Fall durch stationäre Simulation mit AspenPlus10.2™ bestimmt und sind in Tabelle 1 zusammengestellt. Jedes Segment wurde durch jeweils nur eine Gleichgewichtsstufe abgebildet. Als Stoffmodell wurde das Elektrolyt-NRTL Modell verwendet, dessen Parametrierung auf Basis von Messwerten für das Phasengleichgewicht in den Stoffsystemen HCl/H₂O, HBr/H₂O und HBr/HCl/H₂O validiert wurde. Der gasförmige Chlorwasserstoffstrom tritt am Sumpf des Absorbers ein und wird im Gegenstrom zum Absorptionsmittel geführt. Durch Kontakt mit dem Wasser oder der wässrigen Salzsäure stellt sich auf den theoretischen Trennstufen das thermodynamische Gleichgewicht ein, das sehr wesentlich durch die Dissoziation der gelösten Säuren beeinflusst wird. Aufgrund der Lage des reaktiven Phasengleichgewichtes gelingt die Chemisorption von Bromwasserstoff auch in konzentrierte Salzsäure, die durch die simultane Absorption des Chlorwasserstoffs in das Wasser entsteht.

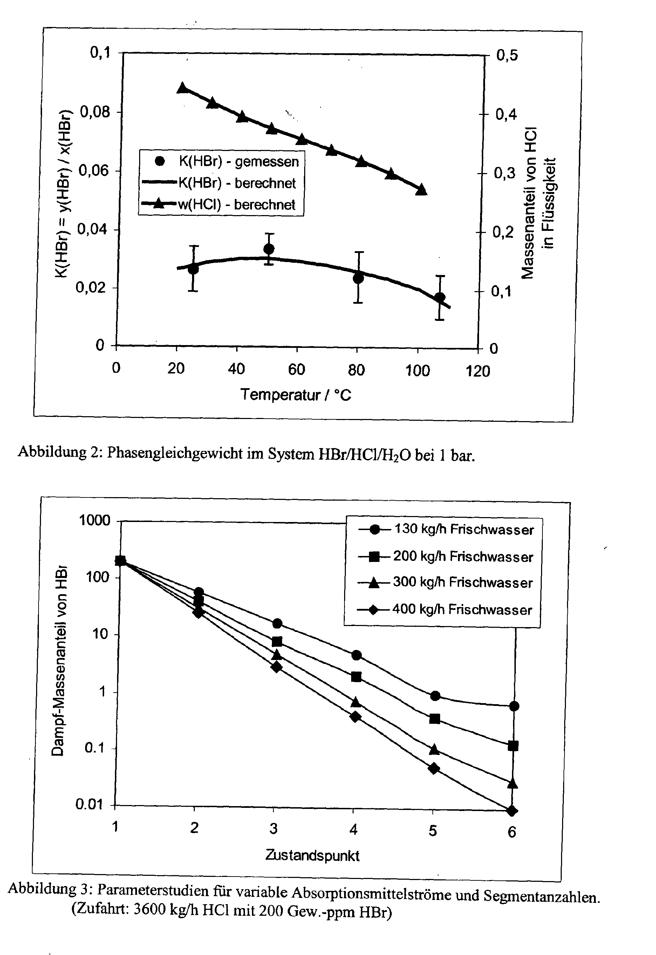

Abbildung 2 zeigt den gemessenen Verteilungskoeffizienten des HBr (= Molenbruch von HBr im Dampf / Molenbruch von HBr in der flüssigen Phase) in Abhängigkeit der Siedetemperatur sowie dem zugehörigen Gleichgewichts-Massenanteil von HCl in der flüssigen Phase bei einem Druck von 1 bar. Man erkennt, dass der Verteilungskoeffizient selbst bei Absorption in konzentrierte Salzsäure deutlich kleiner als Eins und die selektive Abscheidung des HBr aus HCl damit thermodynamisch möglich ist.

Der Massenstrom des mit dem beladenen Absorptionsmittel aus dem Prozess ausgeschleusten Chlorwasserstoffs liegt unter 20 %, bevorzugt unter 10 %, besonders bevorzugt unter 5 % der ingesamt zugeführten Menge des Chlorwasserstoffs. Um die Menge des ausgeschleusten verunreinigten Absorptionsmittels zu minimieren und dennoch eine ausreichende Berieselungsdichte, das heißt ein ausreichend großes Verhältnis von Flüssigkeitsmenge/Dampfmenge (L/G-Verhältnis) zu gewährleisten, wird das Absorptionsmittel vorzugsweise in mehreren getrennten Kreisläufen zum Sumpf des Absorbers geführt.

Der Absorber kann dabei in zwei oder mehr Segmente mit gekoppelten Absorptionsmittelkreisläufen untergliedert sein. Jedes der Segmente kann mehrere theoretische Trennstufen enthalten. In der untersten Stufe eines jeden Segments wird die flüssige Phase vollständig abgezogen, zum Teil mit frischem Absorptionsmittel gemischt und anschließend am Kopf des Segments erneut aufgegeben. Der Massenstrom des im Kreis geführten Absorptionsmittels wird dabei konstant gehalten. Der Anteil des im jeweils oberen Segment (zum Beispiel 3) abgezogenen Absorptionsmittels wird dem Kreislauf des jeweils unteren Segments (zum Beispiel 2) zugesetzt. Im obersten Segment wird frisches Absorptionsmittel, hier Frischwasser, zugeführt. Im untersten Segment wird der abgezogene Teil des beladenen Absorptionsmittels aus dem Prozess ausgeschleust und kann einer Wiederverwertung zugeführt werden. Da die Fremdhalogenwasserstoff-Beladung des Absorptionsmittels vom obersten zum untersten Segment kontinuierlich abnimmt, gelingt auf die beschriebene Weise eine sehr gute Aufreinigung mit einem relativ geringen Verlust an beladenem Absorptionsmittel. Insgesamt wird eine Gegenstromfahrweise von Gas zu Flüssigkeit bevorzugt.

In Tabelle 1 ist erkennbar, dass zum Beispiel eine anfängliche Bromwasserstoff-Beladung des Gasstroms von 200 Gew.-ppm auf 6 Gew.-ppm in nur zwei Segmenten erreicht wird. Der Verlust an reinem Chlorwasserstoff beträgt dabei nur ca. 5 % der eingesetzten Menge an Chlorwasserstoff. Durch Hinzunahme weiterer Segmente wird eine weitere Feinreinigung erreicht. Nach vier Segmenten liegt die Dampfkonzentration an HBr bei ca. 197 Gew.-ppb. Durch die Berücksichtigung eines Partialkondensators am Kopf wird eine weitere Aufreinigung auf 59 ppb bei gleichzeitiger Trocknung des Gasstroms erzielt. Die Kondensatortemperatur im Beispiel beträgt -10 °C. Die Austrittskonzentration des Wassers im Reingas beträgt 25 Gew.ppm.

Über den in Tabelle 1 simulierten Lastfall hinaus wurden weitere Parameterstudien zum Einfluss variabler Absorptionsmittelmengen durchgeführt. Die Ergebnisse sind in Abbildung 3 dargestellt. Man erkennt, dass mit dem Verfahren durchaus Kopfreinheiten von deutlich unter 1 Gew.-ppm Bromwasserstoff erreicht werden können. Durch die Kreislaufführung ist der Austrag an Chlorwasserstoff aus dem Prozess sehr gering, während das L/G-Verhältnis in den Segmenten beliebig einstellbar ist.

**Tabelle 1:**

| Ergebnisse aus stationärer Simulation bei 1 bar. Als Absorptionsmittel wurde reines Wasser eingesetzt (Massenanteil Wasser = Massenanteil HCl - Massenanteil HBr) | | | | | |
|---|---|---|---|---|---|
| Zustandspunkt | Aggregatzustand | Temperatur [ °C ] | Massenstrom [ kg/h ] | Massenanteil HCl [ Gew.-% ] | Massenanteil HBr [ Gew.-ppm ] |
| 1 | vap | 20 | 3600 | 99,98 | 200 |
| 2 | vap | 22 | 3592,9 | 99,9 | 34 |
| 3 | vap | 28,4 | 3579,7 | 99,8 | 6 |
| 4 | vap | 37,5 | 3559,9 | 99,6 | 1 |
| 5 | vap | 52,4 | 3510,7 | 98,7 | 0,197 |
| 6 | vap | -10 | 3408,7 | 99,997 | 0,059 |
| 7 | liq | 20 | 250 | 0 | 0 |
| 8 | liq | 58,6 | 2000 | 33,9 | 9 |
| 9 | liq | 41,9 | 2000 | 38,9 | 51 |
| 10 | liq | 30,7 | 2000 | 41,5 | 282 |
| 11 | liq | 23,6 | 2000 | 43,2 | 2000 |
| 12 | liq | 23,6 | 441,3 | 43,2 | 2000 |

## Patentansprüche

1. Verfahren zur Trennung von Chlorwasserstoff und kleinen Mengen Fremdhalogenwasserstoff,
**dadurch gekennzeichnet, dass**
das Chlorwasserstoff und Fremdhalogenwasserstoffe enthaltende Gas in einem Absorber mit einem Absorptionsmittel in Kontakt gebracht wird und das Absorptionsmittel mindestens einen Fremdhalogenwasserstoff selektiv zurückhält.

2. Verfahren nach Anspruch 1,
**dadurch gekennzeichnet, dass**
die Chlorwasserstoffmenge, die den Prozess mit dem beladenen Absorptionsmittel verlässt, weniger als 20 %, vorzugsweise weniger als 10 %, besonders bevorzugt weniger als 5 % der mit dem Rohgas zugeführten Chlorwasserstoffmenge beträgt.

3. Verfahren nach Anspruch 1 und 2,
**dadurch gekennzeichnet, dass**
der Absorber aus mindestens zwei Segmenten mit gekoppelten Absorptionsmittelkreisläufen besteht.

4. Verfahren nach Anspruch 3,
**dadurch gekennzeichnet, dass**
die Segmente in kontinuierlichem Gegenstrom betrieben werden.

5. Verfahren nach einem der Ansprüche 1 bis 4,
**dadurch gekennzeichnet, dass**
zur Feinreinigung und Trocknung eine partielle Kondensation des austretenden Reingases bei- 20 °C bis + 40 °C erfolgt.

6. Verfahren nach einem der Ansprüche 1 bis 5,
**dadurch gekennzeichnet, dass** die Temperatur bei der Absorption im Bereich von 0 °C bis 150 °C, vorzugsweise 10 °C bis 80 °C, liegt.

7. Verfahren nach einem der Ansprüche 1 bis 6,
**dadurch gekennzeichnet, dass**
der Druck bei der Absorption im Bereich von 0,1 bar bis 20 bar absolut liegt.

8. Verfahren nach einem der Ansprüche 1 bis 7,
**dadurch gekennzeichnet, dass**
die Konzentration des Chlorwasserstoffs im Rohgasstrom im Bereich von 10 Vol.-% bis 100 Vol.-%, fremdhalogenwasserstofffrei gerechnet, liegt.

9. Verfahren nach einem der Ansprüche 1 bis 8,
**dadurch gekennzeichnet, dass**
Bromwasserstoff aus Chlorwasserstoff abgetrennt wird.

10. Verfahren nach Anspruch 9,
**dadurch gekennzeichnet, das** die Konzentration an Bromwasserstoff im Rohgas 5 Gew.ppm bis 2000 Gew.-ppm, vorzugsweise 5 Gew.-ppm bis 400 Gew.-ppm, beträgt.

11. Verfahren nach Anspruch 1,
**dadurch gekennzeichnet, dass** die Konzentration des Bromwasserstoffs im gereinigten Chlorwasserstoff unter 1 Gew.-ppm beträgt.

12. Verfahren nach Anspruch 1,
**dadurch gekennzeichnet**,
das Wasser als Absorptionsmittel eingesetzt wird.

13. Verfahren nach Anspruch 1,
**dadurch gekennzeichnet, dass**
eine wässrige Chlorwasserstofflösung als Absorptionsmittel eingesetzt wird.
